# EUROPÄISCHE PATENTANMELDUNG

(11) **EP 3 412 606 A1**
(43) Veröffentlichungstag der Anmeldung: **12.12.2018**
(21) Anmeldenummer: 17175054.0
(22) Anmeldetag: 08.06.2017
(51) Int. Cl.: B65G 63/06, B60P 1/64, B65G 67/02, B65D 90/12

(54) **LAGERSTATION FÜR GROSSBEHÄLTER MIT BEHÄLTERSTÜTZE MIT VERFAHRBAREM EINGREIFELEMENT**

(71) Anmelder: Innovatrain AG, 3011 Bern (CH)
(72) Erfinder: Wegmüller, Beat, 4950 Huttwil (CH)
(74) Vertreter: BOVARD AG

(57) **Zusammenfassung**

Lagerstation (1) für Grossbehälter mit wenigstens vier Behälterstützen (10), die zwischen sich einen Lagerbereich definieren und die jeweils ein Eingreifelement (12) zum Lagern des Grossbehälters an oder auf den Behälterstützen (10) aufweisen, wobei das Eingreifelement (12) ein Greifkantenelement (34) umfasst, welches in Eingriff mit einer am Grossbehälter ausgebildeten Greifkante bringbar ist und welches bewegbar ist zwischen einer Lagerposition, in der es zum Lagerbereich hin gerichtet und zum Aufnehmen des Grossbehälters bereit ist, und einer Freigabeposition, in der es weg vom Lagerbereich gerichtet ist. Ferner ist das Greifkantenelement (34) mindestens in die Lagerposition und/oder Freigabeposition automatisch mittels einer Federkraft eines Federelements (46) bewegbar.

## Beschreibung

### Technisches Gebiet der Erfindung

Die Erfindung bezieht sich auf eine Lagerstation für Grossbehälter, auch als Container-Stationen bezeichnet, wobei der Grossbehälter auf Behälterstützen abgesetzt wird, welche ein verfahrbares Eingreifelement zum Sichern und Halten des Grossbehälters aufweisen.

### Stand der Technik

Zum Transport von Waren und Gütern werden Grossbehälter eingesetzt, insbesondere Container oder Wechselbehälter, welche auf Lastkraftwagen (LKW), Bahn und Schiffen transportiert werden. Container und Wechselbehälter sind für verschiedene Anwendungen normiert, so sind 40-Fuss-Container nach der ISO-Norm 668 oder im Binnenverkehr etwas breitere Binnencontainer bekannt, aus denen nach der europäischen Norm EN die normierten Wechselbehälter gemäss EN 283, 284, 452, 1432, 12406, 12410 und 12641 hervorgegangen sind. Aufgrund der für einen LKW optimalen Abmessungen sind für einen Wechselbehälter mit Greifkanten Längen von 7,15 m, 7,45 m und 7,82 m üblich. Hierbei kann der Transport mit einem LKW, bestehend aus Vorwagen und Anhänger, oder auch solche mit Auflieger mit einer Länge von ca. 13,60 m zum Einsatz kommen.

Die ISO-Container weisen standardisierte Container-Ecken auf, die als «Cornercastings» bezeichnet sind, welche ein sicheres Stapeln der Container ermöglichen und welche gleichzeitig für das Verladen der Container eine Rolle spielen. Beim Transport solcher Container auf dem Landweg mittels LKWs wirken diese Container-Ecken dann mit einer Container-Verriegelung (Twistlock) an einem LKW-Sattelauflieger zum Sichern zusammen.

Zur Vermeidung von langen Standzeiten des LKW beim Be- und Entladen, in welchen er nicht für weitere Transporte zur Verfügung steht, sind Lagerstationen bekannt. Lagerstationen sind eingerichtet, um den Grossbehälter von einem LKW aufzunehmen, ihn auf Stützeinrichtungen abzusetzen, beispielsweise Behälterstützen, ihn mittels Einrichtungen zu sichern und zu halten, so dass der entladene LKW unmittelbar wieder für einen Transport zur Verfügung steht.

So ist aus US 2008/0298939 A1 bekannt, um die Standzeit eines LKWs zu verringern, einen auf dem LKW befindlichen Grossbehälter auf eine Station mit vier Ständerfüssen umzuladen. Diese Ständerfüsse befinden sich jeweils dort, wo der Grossbehälter an den vier Eckbereichen eine Auflagefläche zum Aufsetzen des Grossbehälters aufweist. Ein zu entladender LKW wird zunächst zwischen den Ständerfüssen ausgerichtet, um dann die LKW-Ladefläche pneumatisch, elektrisch, hydraulisch oder mechanisch abzusenken, so dass der Grossbehälter auf den bereitstehenden Ständerfüssen aufsitzt und der LKW ohne den Grossbehälter weiterfahren kann. Der so abgestellte Container verbleibt jedoch auf den Ständerfüssen ungesichert, bzw. auf einer daran um eine vertikale Achse schwenkbar angeordneten Auflagefläche.

Aus CH 708 471 A2 ist eine Lagerstation für Grossbehälter mit schwenkbaren Stützen bekannt, die zum Grossbehälter hin und von diesem weg geschwenkt werden können. An den Stützen ist jeweils eine Kopplungs- und Sicherungseinrichtung angeordnet, die beim Absenken des Grossbehälters auf die Stütze automatisch betätigt wird. Der Grossbehälter wird somit sicher auf den Stützen gehalten. Gleichzeitig erlauben die schwenkbaren Stützen einen gewissen Spielraum beim Platzieren des LKWs zwischen den Stützen. Beim Anheben des Grossbehälters werden die Kopplungs- und Sicherungseinrichtungen gelöst und die Stützen schwenken automatisch vom Grossbehälter zurück, so dass der LKW den Grossbehälter abtransportieren kann. Gerade das Ausklappen bzw. Verschwenken der Stützfüsse, welche teilweise manuell zu erfolgen hat, hat sich in der Praxis als zeitintensiv und arbeitsintensiv erwiesen.

Ein schneller Transfer von Grossbehältern zwischen einem LKW und einer Lagerstation, auf welcher ein Grossbehälter für seine weitere Verwendung gelagert werden soll, damit der LKW frei wird und weiterfahren kann, hängt wesentlich mit der einfachen und schnellen Bedienbarkeit der Vorrichtung und mit dem sicheren Abstellen des Grossbehälters auf der Lagerstation, bzw. den Behälterstützen zusammen. Dieser Transfer und die zugehörige Sicherung des Grossbehälters können zeitintensiv sein und sollen für einen schnellen Umschlag möglichst optimiert werden.

Im Allgemeinen umfasst eine Lagerstation für Grossbehälter, wie etwa Container oder Wechselbehälter, wenigstens vier Stützeinheiten, im Folgenden auch als Behälterstützen bezeichnet, die zwischen sich einen Lagerbereich definieren und die jeweils eine Aufnahme zum Lagern des Grossbehälters an oder auf den Stützeinheiten aufweisen. Der Lagerbereich ist derjenige Raum, der von dem Grossbehälter eingenommen wird, wenn er auf der Lagerstation gelagert wird. In der Regel sind die Grossbehälter in bekannter Weise als Quader ausgebildet, so dass die Stützeinheiten vorteilhaft z.B. paarweise an zwei gegenüberliegenden Seiten des Quaders vorgesehen werden und somit der Lagerbereich im Inneren des von den Stützeinheiten aufgespannten Vierecks liegt.

### Zusammenfassung der Erfindung

Der vorliegenden Erfindung liegt die Aufgabe zugrunde, für eine Lagerstation für Grossbehälter ein schnelles Abstellen von Grossbehältern und ein sicheres Halten derselben auf den Behälterstützen zu gewährleisten und möglichst zu verbessern, sowie eine robuste Verwendung der Lagerstation zu ermöglichen. Insbesondere soll das aus dem beschriebenen Stand der Technik als anfällig bekannte Ausklappen oder Verschwenken der Behälterstützen vermieden werden.

Diese Aufgaben werden von der Erfindung durch eine Lagerstation nach Anspruch 1 und eine Behälterstütze nach Anspruch 14 gelöst. Vorteilhafte Ausgestaltungen und Ausführungsbeispiele sind in den abhängigen Ansprüchen beschrieben.

Nach der Erfindung wird eine Lagerstation für Grossbehälter vorgesehen, die wenigstens vier Behälterstützen umfasst, die zwischen sich einen Lagerbereich definieren und die jeweils ein Eingreifelement zum Lagern des Grossbehälters an oder auf den Behälterstützen aufweisen, wobei das Eingreifelement zwischen einer Lagerposition, in der es zum Lagerbereich hin gerichtet und zum Aufnehmen des Grossbehälters bereit ist, und einer Freigabeposition bewegbar ist, in der es weg vom Lagerbereich gerichtet ist, und das Eingreifelement ein Greifkantenelement aufweist, welches in Eingriff mit einer am Grossbehälter ausgebildeten Greifkante bringbar ist. Gemäss der Erfindung ist das Eingreifelement mindestens in die Lagerposition und/oder Freigabeposition automatisch mittels einer Federkraft eines Federelements bewegbar.

Eine Behälterstütze umfasst eine Halterung, welche eine als Lagerbock ausgebildete Basis umfasst, die an einer Bodenstruktur verankert werden kann. In der Halterung, welche darüber hinaus ein Arretierrohr umfasst, welches beispielsweise als Vierkantrohr ausgebildet ist, ist mindestens ein Stützelement verschieblich aufgenommen. In einer Ausführungsform ist die Behälterstütze höhenverstellbar ausgebildet. Hierbei ist das mindestens eine Stützelement, ausgebildet als Verstellrohr, relativ zum Lagerbock axial beweglich an diesem gelagert. Das mindestens eine Stützelement und der Lagerbock der Behälterstütze sind länglich ausgebildet und entlang einer gemeinsamen Längsachse angeordnet, so dass diese relativ zueinander entlang dieser Längsachse verschieblich sind. Beispielsweise ist das mindestens eine Stützelement in der Aufnahme des Lagerbocks verschieblich aufgenommen, so dass die Behälterstütze höhenverstellbar ist.

Die Behälterstütze ist robust ausgebildet und zur Aufnahme von hohen Gewichten der Grossbehälter bis zu 35 to. geeignet, so dass diese sicher auf der Lagerstation abgeladen und wieder von dieser aufgenommen werden können. Zum Absetzen auf und Anheben von einer Behälterstütze kann vorteilhaft eine in einem LKW vorhandene Luftfederung genutzt werden, welche eine einfache Niveauregulierung ermöglicht. So umfasst das Abstellen eines Grossbehälters von einem in die Lagerstation eingefahrenen LKW ein Anheben des Containers durch die Luftfederung und mindestens ein Absenken des Grossbehälters auf die Behälterstützen durch die Luftfederung. Ein Aufnehmen eines Grossbehälters von einer Lagerstation auf einen bereitstehenden LKW erfolgt ebenfalls mit Unterstützung der Luftfederung in umgekehrter Reihenfolge.

Im oberen Bereich der Behälterstütze ist das als eine autonome Einheit ausgebildete Eingreifelement angeordnet, welche mit der Behälterstütze verbindbar und daran gelagert und gehalten ist. Alternativ kann aber auch das Eingreifelement mittels eines Trägers an der Behälterstütze angeordnet werden.

Das Eingreifelement umfasst ein Greifkantenelement, ausgebildet zum Eingriff in eine am Grossbehälter ausgebildete Container-Ecke oder Container-Greifkante. Das Greifkantenelement kann für den Eingriff in die jeweilige Container-Ecke zapfenförmig oder zum Eingriff in die Greifkante des Grossbehälters als komplementäre Greifkante ausgebildet sein. Das Greifkantenelement ist in seiner Form und Grösse so ausgebildet, dass es in einen standardisierten an einem Grossbehälter an jeder Ecke vorgesehenen Hohlraum (Cornercasting) eingreifen kann. Wechselbehälter weisen im Allgemeinen Greifkanten auf, welche als Rillen oder Rücksprünge in Bodenlängsträgern in etwa benachbart zu den Container-Ecken (Cornercastings) angeordnet sind. Demnach weist das Greifkantenelement eine komplementär ausgebildete Greifkante auf, welche in Eingriff mit der Greifkante des Grossbehälters bringbar ist. Die Greifkante umfasst eine Auflagefläche, auf die der Grossbehälter abgestellt und gehalten werden kann sowie einen vertikalen Anschlag, welcher weitgehend senkrecht zur Auflagefläche ausgebildet ist. Durch die Normung der Grossbehälter bzw. der Wechselbehälter und die Anpassung der Eingreifelemente bzw. der umfassten Greifkantenelemente an die am Container ausgebildeten Kopplungselemente in Form und Anordnung wird ein sicherer Eingriff und Halten eines Containers durch die Behälterstützen erreicht.

Jeweils zwei sich gegenüberliegende Behälterstützen legen die Breite des sich dazwischen aufspannenden Lagerbereichs fest. Dagegen variiert die Breite handelsüblicher Grossbehälter in einem gewissen Bereich. Damit gewährleistet ist, dass ein LKW frei zwischen den fixierten Behälterstützen einer Lagerstation ein- bzw. ausfahren kann und der Grossbehälter sicher auf diesen abgestellt wird, ist bei fixierten Behälterstützen vorgesehen, dass das Greifkantenelement entlang einer an dem Eingreifelement angeordneten, variierenden Führungsstrecke bewegbar ist.

Das Greifkantenelement ist ausgebildet, so dass es entlang der Führungsstrecke zumindest in eine Richtung automatisch durch das Federelement bewegbar ist. Die Führungsstrecke erstreckt sich zwischen der Freigabeposition, in der das Greifkantenelement eingefahren, d.h. in Bezug auf den Lagerbereich zurückgezogen ist, so dass dieser frei ist und ein ein- bzw. ausfahrender LKW nicht behindert ist und einer Lagerposition. In der Lagerposition ist das Greifkantenelement zum Lagerbereich hin ausgefahren und in einer Position, um den Grossbehälter aufzunehmen, wobei es in Eingriff mit einer Container-Ecke oder einer Container-Greifkante gebracht ist.

In einer Ausführungsform ist das Greifkantenelement gegen die Federkraft manuell in die entgegengesetzte Position, d.h. in die Lager- und/oder Freigabeposition, bewegbar. Alternativ ist das Greifkantenelement gegen die Federkraft mittels einer Antriebseinheit in die Lager- und/oder Freigabeposition bewegbar.

Erfindungsgemäss ist vorgesehen, dass das Eingreifelement in Bezug auf die vertikale Längsachse der Behälterstütze so angeordnet ist, dass das Greifkantenelement bzw. die von ihm zu verfahrende Führungsstrecke gegenüber der Horizontalen geneigt ist, vorzugsweise in einem Bereich zwischen 5° bis 10°. Demnach besteht zwischen der Freigabeposition und der Lagerposition des Greifkantenelements auch in vertikaler Richtung eine Differenz. In einer ersten Ausführungsform verläuft die Neigung in Richtung Freigabebereich, in einer zweiten Ausführungsform verläuft die Neigung in umgekehrter Richtung. Mit der umgekehrten Richtung wird der Behälter nach dem Abstellen in der Lagerposition automatisch zur Mitte zentriert. Mit der erfindungsgemäss vorgesehenen Neigung der Eingreifelemente wird das Behältergewicht gleichmässig auf alle vier Behälterstützen verteilt und das Wiederaufnehmen des Behälters erleichtert.

Das Eingreifelement kann an dem Stützelement einer Behälterstütze gelagert sein. So kann das Stützelement eine weitgehend vertikal angeordnete Anlagefläche aufweisen, auf welche das Eingreifelement mit einer entsprechend ausgebildeten Grundplatte angeordnet und befestigt, beispielsweise verschraubt, werden kann. Das Eingreifelement umfasst das verschiebliche Greifkantenelement, ausgebildet als Schlitten. Eine Führung des Schlittens kann in Form von Lagerkugeln oder Lagerschienen ausgebildet sein.

Das Federelement zur automatischen Bewegung des Greifkantenelements in eine der Positionen ist an dem Eingreifelement vorgesehen und mit dem Schlitten verbunden. Die von dem Federelement aufzubringende Federkraft muss nur so gross sein, dass das Eingreifelement ohne Einwirkung sonstiger Kräfte in die Freigabeposition bzw. in die Lagerposition verschoben werden kann.

In einer ersten Ausführungsform ist das Federelement vorgespannt, um das Greifkantenelement automatisch in die Lagerposition zu bewegen, so dass ein Anlegen des Greifkantenelements an eine Greifkante des Grossbehälters automatisch durch die Federkraft erfolgt. Das Zurückziehen des Greifkantenelements in die Freigabeposition nach dem der Grossbehälter nicht mehr im Eingriff mit dem Greifkantenelement steht, erfolgt automatisch, beispielsweise mittels eines Seilzugs, welcher durch eine an dem Stützelement angeordnete Antriebseinheit bewegbar ist. In einem Notfall kann das Greifkantenelement auch manuell mittels eines Handgriffs in die Freigabeposition bewegt werden.

In einer zweiten Ausführungsform ist das Federelement eingerichtet, um das sich in der Lagerposition befindliche Greifkantenelement in die Freigabeposition automatisch zurückzustellen, wenn das Greifkantenelement nicht mehr mit einem an der Behälterstütze aufgenommenen Grossbehälter in Eingriff steht. Demnach befindet sich das Federelement in der Lagerposition in einem gespannten, in der Freigabeposition in einem entspannten Zustand.

Ferner kann eine Blockiervorrichtung vorgesehen sein, welche die Bewegung des Greifkantenelements, bzw. des umfassten Schlittens, an einem Endpunkt der Führungsstrecke blockiert und somit das Greifkantenelement in der Freigabe- und/oder Lagerposition arretiert. Dabei muss die Blockiervorrichtung das Eingreifelement nicht derart sichern, dass es gegen äussere Krafteinwirkung in dieser Position arretiert wird. Die Freigabe der Blockiervorrichtung kann von Hand erfolgen oder so ausgebildet sein, dass diese bereits beim Aufnehmen bzw. Abstellen des Grossbehälters auf den Behälterstützen automatisch gelöst wird. In einer Ausführungsform ist an dem Schlitten ein mit diesem bewegbares Rastelement vorgesehen, welches in einer Ausnehmung eingreift, wenn das Eingreifelement in der Lagerposition bzw. in der Freigabeposition ist.

Das Eingreifelement umfasst einen Griff oder Betätigungshebel, um ein manuelles Ein- und Ausfahren des Greifkantenelements zu ermöglichen. So kann in der ersten Ausführungsform das Greifkantenelement mittels des Griffs aus der Lagerposition entgegen der wirkenden Federkraft des Federelements in die Freigabeposition manuell bewegt werden, bzw. alternativ erfolgt dies mittels der Antriebseinheit.

In einer zweiten Ausführungsform, in der das Greifkantenelement in der Freigabeposition durch das Federelement automatisch verbracht ist, ist der Betätigungshebel mit einem Hebelmechanismus gekoppelt, um das Greifkantenelement auch manuell zu bewegen, insbesondere in die Lagerposition zu bringen. Der Betätigungshebel ist am Eingreifelement schwenkbar aufgenommen und mittels des Hebelmechanismus mit dem Schlitten bzw. Greifkantenelement lösbar verbunden. Eine entsprechende Kopplung kann über eine Feststelleinrichtung erfolgen, z.B. einen Rastbolzen. Beispielsweise wird bei einer Bewegung des Betätigungshebels, welche vorzugsweise in vertikaler Richtung erfolgt, das nun mehr starr verbundene Greifkantenelement von der ausgefahren Lagerposition an einen in dem Lagerbereich positionierten Grossbehälter angefahren. Insbesondere ist durch die manuelle Bedienung des Betätigungshebels ein Ein- und Ausfahren des Greifkantenelements auch in den Fällen möglich, wenn die Antriebseinheit nicht funktionsfähig ist oder nicht mit Energie versorgt werden kann. Damit ist eine Lagerstation auch dann funktionsfähig, wenn keine Energieversorgung vor Ort vorhanden ist.

Ferner kann die Verschiebung des Greifkantenelements mittels der Antriebseinheit erfolgen, welche das an dem Eingreifelement verschieblich angeordnet Greifkantenelement bzw. den Schlitten zumindest teilweise oder vollständig automatisch zwischen Freigabeposition und Lagerposition bewegt. Die Antriebseinheit zum Verschieben des Greifkantenelements kann einen Elektromotor umfassen, welcher beispielsweise eine als Gewindespindel ausgebildete Welle rotatorisch antreibt, die an Lagereinheiten an dem Eingreifelement gelagert ist. Hierbei steht die Gewindespindel mit einer Spindelmutter in Eingriff, welche an dem Schlitten angeordnet ist, so dass die rotatorische Bewegung der Gewindespindel in eine translatorische Bewegung des Schlittens und damit des damit verbundenen Greifkantenelements umgewandelt wird. Alternativ kann auch ein Elektromotor mit einer Ausschubstange eingesetzt werden.

In einer bevorzugten Ausführungsform erfolgt, sobald der Grossbehälter nicht mehr die Behälterstütze belastet, automatisch ein Rückstellen des Greifkantenelements aus dem Lagerbereich und damit das Einnehmen der Freigabeposition aufgrund des vorgespannten Federelements. Vorteilhaft besteht darüber hinaus aber auch die Möglichkeit durch den Griff bzw. Hebelmechanismus, sowohl das Ein- als auch das Ausfahren des Greifkantenelements in die Lagerposition manuell durchzuführen.

An der Behälterstütze ist gemäss einer Ausführungsform eine Signaleinrichtung vorgesehen, welche beispielsweise durch optische Signalanzeigen anzeigt, in welcher Position und Zustand sich das Eingreifelement befindet. Somit wird angezeigt, ob der Vorgang des Absetzens eines Grossbehälters an den vorgesehenen Behälterstützen abgeschlossen ist, ob die entsprechenden Eingreifelemente einsatzbereit sind und/oder ob sich die Greifkantenelemente in Lagerposition befinden.

Ferner ist ein Steuereinheit vorgesehen, welche das Ein- und/oder Ausfahren der Greifkantenelemente steuert, wobei die Steuereinheit Signale von Sensormitteln empfangen kann, welche einen auf die Behälterstützen abzustellenden Grossbehälter anzeigen und welche dessen geometrische Abmessungen abbilden, so dass das Eingreifelement entsprechend bedient werden kann. Alternativ kann die Steuereinheit auch über eine Fernbedienung aktiviert werden.

Eine Lagerstation nach der vorliegenden Erfindung umfasst neben den Behälterstützen, welche derart angeordnet sind, dass diese einen Lagerbereich zwischen sich aufspannen, vorzugsweise eine Bodenplatte, welche sich über die gesamte Länge der Lagerstation erstrecken kann. Vorteilhaft ist die Bodenplatte nicht vollflächig ausgebildet, sondern ist entlang der Länge der Lagerstation in Segmente unterteilt. Hierdurch wird Gewicht und Material eingespart. Die Bodenplatte kann seitlich durch Schienenelemente begrenzt sein, welche vorzugsweise als Führungskanten mit vertikal nach oben verlaufenden Seitenwänden ausgebildet sind. Diese seitlichen Schienenelemente begünstigt ein gefahrloses und exaktes Ein- und Ausfahren von Lastkraftwagen, welche in der Lagerstation in kurzer Zeit umgeschlagen werden. Diese Schienenelemente können neben einer Sensorüberwachung eingesetzt werden und weisen eine Verlängerung auf, welche einen Einweisbereich für den LKW-Fahrer bereitstellt. Der Einweisbereich kann sich ausgehend von einem breiteren Einfahrbereich in Längsrichtung verjüngen.

### Kurzbeschreibung der Zeichnungen

Weitere bevorzugte Merkmale und bevorzugte Ausführungsformen werden im Folgenden anhand von Ausführungsbeispielen und den Figuren erläutert. Dabei zeigen:
Fig. 1 eine schematische, vereinfacht dargestellte Gesamtansicht einer erfindungsgemässen Lagerstation mit Behälterstützen, ausgebildet zur Aufnahme einer Greifkante eines Wechselbehälters;
Fig. 2 eine schematische Darstellung einer Behälterstütze gemäss einer Ausführungsform;
Fig. 3a eine schematische Darstellung eines Details einer Behälterstütze gemäss einer zweiten Ausführungsform in einer Freigabeposition;
Fig. 3b eine schematische Darstellung eines Details einer Behälterstütze gemäss der zweiten Ausführungsform in einer Lagerposition;
Fig. 4a eine schematische Darstellung eines Abschnitts der Lagerstation mit Behälterstützen gemäss der zweiten Ausführungsform mit eingefahrenem LKW in einer ersten Phase des Abstellens des Wechselbehälters;
Fig. 4b eine schematische Darstellung eines Abschnitts der Lagerstation mit Behälterstützen gemäss der zweiten Ausführungsform in einer zweiten Phase des Abstellens des Wechselbehälters;
Fig. 4c eine schematische Darstellung eines Abschnitts der Lagerstation mit Behälterstützen gemäss der zweiten Ausführungsform in einer dritten Phase des Abstellens des Wechselbehälters;
Fig. 4d eine schematische Darstellung eines Abschnitts der Lagerstation mit Behälterstützen gemäss der zweiten Ausführungsform in einer vierten Phase des Abstellens des Wechselbehälters;

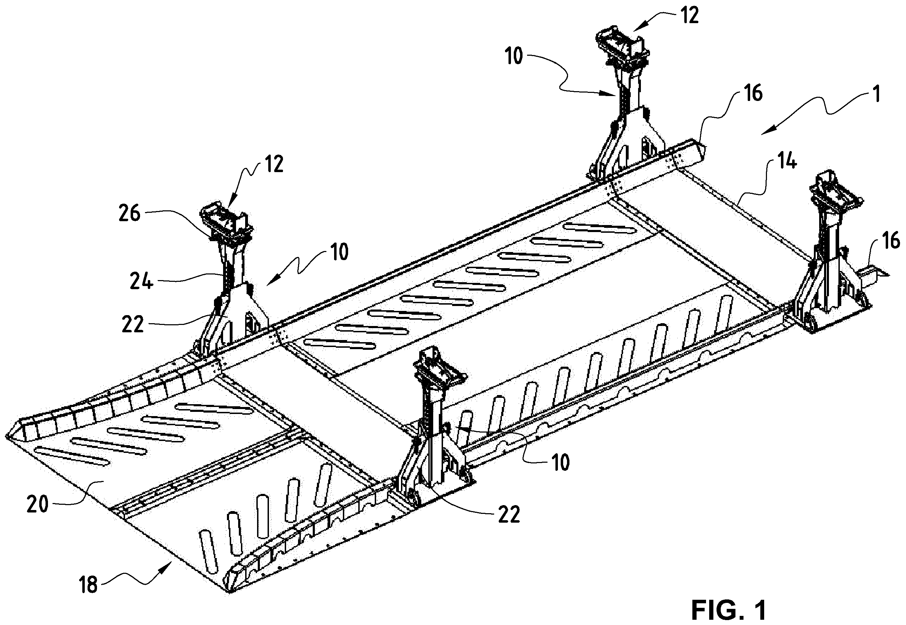

Eine erfindungsgemässe Lagerstation, wie sie aus Fig. 1 insgesamt ersichtlich ist und dort mit Bezugszeichen 1 bezeichnet ist, dient grundsätzlich als Standort zur Aufnahme von ISO-Containern oder Wechselbehältern, welche im Rahmen der Erfindung allgemein als Grossbehälter bezeichnet werden. Die erfindungsgemässe Lagerstation 1 ist modular aufgebaut und kann nach Bedarf einfach und schnell zur Aufnahme von weiteren Wechselbehältern erweitert werden. Dies ist dann notwendig, wenn beispielsweise an dem LKW noch ein Anhänger angehängt ist. Grossbehälter, d.h. ISO-Container und Wechselbehälter sind allgemein bekannt.

Die Lagerstation 1 ist eingerichtet, um sowohl den europäischen Wechselbehältern als auch den weltweit eingesetzten ISO-Containern einen kurz- als auch langfristigen Lagerplatz und um somit den unterschiedlichen Grossbehältern einen flexiblen Standort zur Verfügung zu stellen. Somit steht ein schneller und effektiver Umschlag der Güter durch die Lagerstation bereit, welche flexibel an die Begebenheiten angepasst werden kann.

Die Lagerstation 1 weist ein oder mehrere Stützplatten 14 auf, die seitlich durch Führungsschienen 16 begrenzt sind, welche ein Bestandteil einer Spurführung als Positionierungshilfe sind, um ein Einfahren eines LKWs zwischen diesen Führungsschienen 16 und somit in die Lagerstation 1 zu erleichtern. Ferner können Bodenplatten 18 in Kombination mit den Führungsschienen 16 vorgesehen sein. Hierbei können die Führungsschienen 16 in Längsrichtung der Lagerstation 1 betrachtet, einen Einweisbereich aufweisen, in dem die Führungsschienen 16 sich in Richtung Lagerstation 1 konisch verjüngen. Demnach ist der Einweisbereich zunächst breiter ausgebildet als die eigentliche Lagerstation 1, so dass eine Art vorgelagerte Einweisführung für ein gefahrloses Einfahren vorgesehen ist. In dem Einweisbereich kann ebenfalls eine besonders ausgeführte Einweisplatte 20 vorgesehen sein, welche dem Fahrer ein Einfahren in den Einweisbereich anzeigt. Seitlich entlang der Führungsschienen 16 sind auf beiden Seiten der Stützplatten 14 jeweils zwei zueinander beabstandete Behälterstützen 10 vorgesehen, die zwischen sich einen Lagerbereich für einen Grossbehälter definieren. Der Lagerbereich wird auch durch die Führungsschienen 16 und die Stützplatten 14 markiert, wobei ein Grossbehälter im oberen Bereich der Behälterstützen 10 gelagert ist.

Die Behälterstütze 10 weisen in der Ausführungsform der Figur 1 einen Lagerbock 22 und mindestens ein Stützelement 24 in Form eines Vierkantrohres und am oberen Ende eine Anlagefläche 26 für Eingreifelemente 12 auf. Die Behälterstützen 10 sind am Lagerbock 22 starr gelagert, so dass sie sich stets weitgehend in vertikaler Längsrichtung erstrecken.

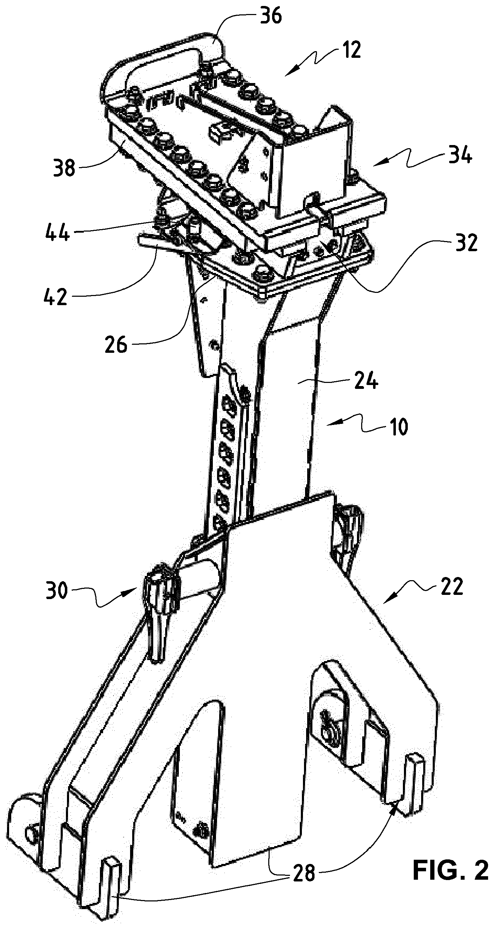

In Fig. 2 ist eine Ausführungsform einer Behälterstütze 10 gezeigt. Die Behälterstütze 10 umfasst den Lagerbock 22, welcher für eine robuste Verankerung mit einem Untergrund mehrere Stützbeine 28 aufweist. Die Stützbeine 28 können direkt an den Stützplatten 14 oder mittels eines Sockels verankert werden. Da die umzuschlagenden Grossbehälter weitgehend standardisiert sind, kann die Lagerstation 1 in Bezug auf eine normgerechte Platzierung der Lagerböcke 22 und Behälterstützen 10 ohne grossen technischen Aufwand umgerüstet werden. An dem Lagerbock 22 ist das Stützelement 24 verschieblich aufgenommen, wobei das Stützelement 24 relativ zum Lagerbock 22 entlang einer vertikalen Längsachse beweglich ist. Das Stützelement 24 ist verschieblich innerhalb des Lagerbocks 22 gelagert und mittels einer Verriegelungseinrichtung 30 in einer einstellbaren Höhenposition fixierbar.

Am oberen Ende der Behälterstütze 10, bzw. des mindestens einen Stützelements 24, ist die Anlagefläche 26 ausgebildet, auf welche das Eingreifelement 12 gelagert und befestigt, insbesondere verschraubt aber auch verschweisst, werden kann. Das Eingreifelement 12 kann dabei in einer gegenüber der Horizontalen geneigten Stellung angeordnet sein. Das Eingreifelement 12 weist zur Auflage für einen Grossbehälter in dem in Figur 2 dargestellten Ausführungsbeispiel ein Greifkantenelement 34 auf. Das Greifkantenelement 34 ist an dem Eingreifelement 12 verschieblich gelagert, wobei hierfür eine entsprechende Führung 32 am Eingreifelement 12 ausgebildet ist, beispielsweise eine Schwalbenschwanzführung. Das Greifkantenelement 34 ist in Form und Grösse ausgebildet zum Eingriff in einen standardisiert ausgebildeten Hohlraum bzw. Greifkante der jeweiligen Container- bzw. Wechselbehälterecke, um den Grossbehälter zu halten und/oder zu sichern. Entsprechende Greifkanten sind in der Regel als Rillen oder Rücksprünge in den Bodenlängsträgern von Grossbehältern in etwa nahe der Ecken angeordnet. Bei einem in den Hohlraum der jeweiligen Grossbehälterecke eingreifenden Greifkantenelement 34 wird der Grossbehälter an seinen Ecken entsprechend gestützt und gehalten, so dass ein LKW entladen unmittelbar wieder zur Verfügung steht.

Das Greifkantenelement 34 ist derart verschieblich angeordnet, dass es in eine der umfassten Positionen, d.h. einer Freigabeposition, in dem es aus dem Lagerbereich zurückgezogen ist und einer Lagerposition, in dem es in den Lagerbereich eingefahren und zum Aufnehmen eines Grossbehälters bereit ist, verfahren werden kann. Hierfür kann das Eingreifelement 12 beispielsweise einen Schlitten 38 (nicht dargestellt) umfassen, welcher mit dem Greifkantenelement 34 verbunden ist. Das Greifkantenelement 34 kann an dem Schlitten 38 angeordnet sein, so dass das Greifkantenelement 34 mit dem Schlitten 38 verschiebbar entlang der Führung 32 ist.

An einem dem Greifkantenelement 34 gegenüberliegenden Ende ist in der in Fig. 2 dargestellten Ausführungsform ein Griff 36 vorgesehen, welcher eine manuelle Bewegung des Greifkantenelements 34 ermöglicht, so dass das Greifkantenelement 34 handbetätigt zum Eingriff mit der am Grossbehälter ausgebildeten Griffkante gebracht und aus dem Eingriff entfernt werden kann. Mittels des Griffs 36 kann das Greifkantenelement 34 bzw. der Schlitten 38 entlang der Führung 32 verschoben werden, so dass eine Freigabeposition und eine Lagerposition von dem Greifkantenelement 34 eingenommen wird. Alternativ ist vorgesehen, dass das Greifkantenelement 34 zumindest eine der Positionen automatisch einnimmt. So ist ein Federelement (in Fig. 2 nicht dargestellt) vorgesehen, welches in der Freigabeposition vorgespannt ist und in der Lagerposition entspannt. Demnach wird das Greifkantenelement 34 automatisch in die Lagerposition verfahren und wird gegen die Federkraft des Federelements in die Freigabeposition bewegt, wobei dies manuell oder alternativ mittels einer Antriebseinheit 40 (nicht dargestellt) erfolgt. Die Antriebseinheit 40 ist beispielsweise ein Elektromotor, welcher über einen entsprechenden Mechanismus die translatorische Bewegung des Schlittens 38 einschliesslich des Greifkantenelements 34 ermöglicht.

Ferner ist eine Blockiervorrichtung 42 vorgesehen, welche das Greifkantenelement 34 in einer seiner einzunehmenden Positionen arretiert. Die Blockiervorrichtung 42 kann ein Rastelement 44 umfassen, welches in Eingriff mit einer ausgebildeten Ausnehmung am Schlitten 38 bzw. am Greifkantenelement 34 gebracht wird, wenn von diesen eine entsprechende Position eingenommen ist. Das Lösen der Blockiervorrichtung 42 kann von Hand erfolgen. Alternativ kann aber auch vorgesehen sein, dass beim Absetzen eines Grossbehälters auf die Behälterstützen 10 ein an dem Greifkantenelement 34 angeordnetes Hebelelement derart betätigt wird, das an eine umfasste Steuereinheit ein entsprechendes Signal zum Blockieren des Greifkantenelements 34 erteilt wird.

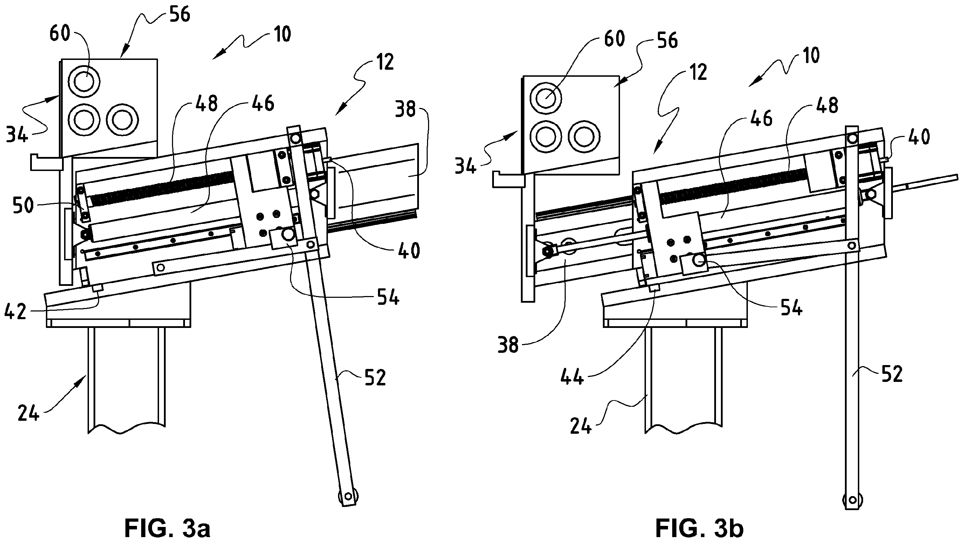

Figur 3a zeigt eine Detailansicht des oberen Endes einer Behälterstütze 10, umfassend eine bevorzugte Ausführungsform eines Eingreifelements 12 in einer Freigabeposition. Das an dem mindestens einen Stützelement 24 aufgenommene Eingreifelement 12 ist derart ausgebildet, dass es sich in einer gegenüber der Horizontalen geneigten Stellung befindet, insbesondere zum Lagerbereich hin geneigt. Das Eingreifelement 12 umfasst das Greifkantenelement 34, welches mit dem verschieblich geführten Schlitten 38 verbunden ist. Ferner ist ein mit dem Greifkantenelement 34 verbindbares Federelement 46 dargestellt, welches in dem in Figur 3a dargestellten Ausführungsbeispiel in Freigabeposition des Greifkantenelements 34 entspannt ist, d.h. das Greifkantenelement 34 wird durch die Federkraft in der Freigabeposition gehalten bzw. automatisch aus der Lagerposition in diese rückgestellt. Aus Figur 3a geht auch die Antriebseinheit 40 hervor, ausgebildet als ein von einem Elektromotor angetriebene Gewindespindel 48, welche mit einer Gewindemutter 50 derart im Eingriff steht, dass die Rotation der Gewindespindel 48 in eine translatorische Bewegung des Schlittens 38 und des Greifkantenelements 34 übertragen wird.

Ferner ist ein Betätigungshebel 52 vorgesehen, welcher ausgebildet ist, um das Greifkantenelement 34 manuell zu bewegen. Der Betätigungshebel 52 ist am Eingreifelement 12 schwenkbar aufgenommen und weist einen Hebelmechanismus auf, welcher den Betätigungshebel 52 mit dem Schlitten 38 bzw. Greifkantenelement 34 mittels einer lösbaren Feststelleinrichtung 54 verbindet, beispielsweise über einen Rastbolzen. Ist die Feststelleinrichtung 54 arretiert, kann bei einer Bewegung des Betätigungshebels 52, vorzugsweise in vertikaler Richtung, das Greifkantenelement 34 aus der Freigabeposition an einen in dem Lagerbereich positionierten Grossbehälter angelegt und mit dessen Greifkante in Eingriff gebracht werden.

Ferner geht aus Figur 3a eine Signaleinrichtung 56 hervor, welche mindestens eine Signalanzeige 60 umfasst, die optisch, akustisch oder auf andere Weise anzeigt, in welcher Stellung und Zustand sich das Eingreifelement 12 befindet.

Figur 3b stellt das Eingreifelement 12 gemäss der zweiten Ausführungsform in der Lagerposition vor. Erkennbar ist der gegenüber der in Fig. 3a dargestellten Freigabeposition ausgefahrene Schlitten 38 und Greifkantenelement 34. In der dargestellten Lagerposition zur Aufnahme eines Grossbehälters befindet sich das Federelement 46 in einem Spannungszustand. Zur Festlegung der Lagerposition ist an dem Greifkantenelement 34 bzw. dem Schlitten 38 die Blockiervorrichtung 42 vorgesehen, mit Rastelement 44, welches in eine entsprechend ausgebildete Ausnehmung des Eingreifelements 12 in der Lagerposition einrastet. Die Blockiervorrichtung 42 kann automatisch beim Absenken eines Grossbehälters auf die Behälterstützen 10 gelöst werden. So kann vorgesehen sein, dass die Führung 32 von Eingreifelement 12 und Schlitten 38 mit einem vertikalen Spiel ausgebildet ist, so ist der Schlitten 38 federnd an dem Eingreifelement 12 aufgenommen. Beim Absetzen eines Grossbehälters auf das Greifkantenelement 34 erfolgt eine vertikale Bewegung des damit verbundenen Schlittens 38, insbesondere um einen vertikalen Abstand von etwa 2 bis 4 mm, wobei das Rastelement 44 ebenfalls eine Bewegung vollführt, die ausreichend ist, um die Blockiervorrichtung 42 zu lösen.

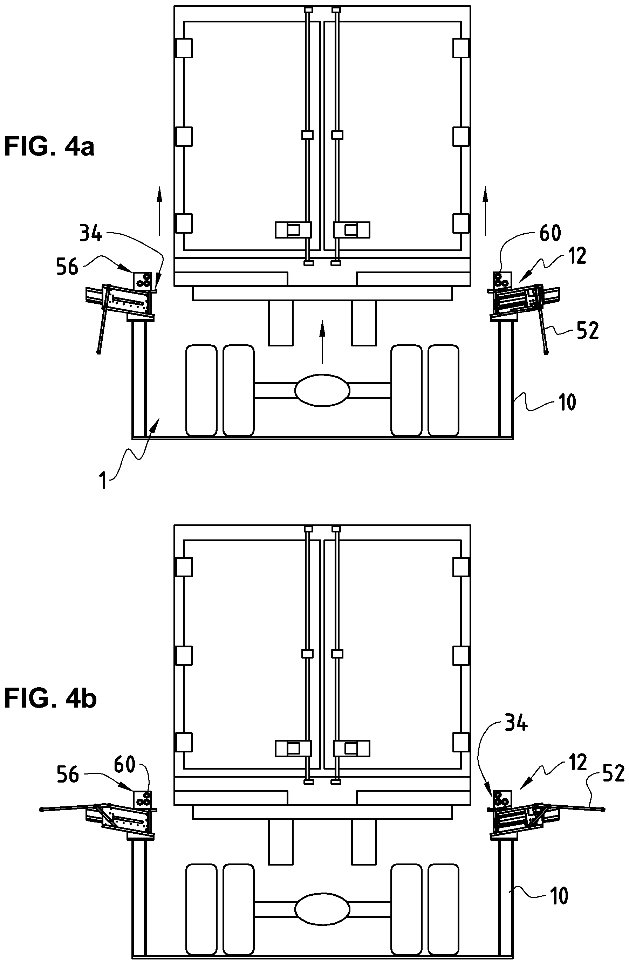

Die Figuren 4a bis 4d zeigen verschiedene Phasen der Aufnahme eines Grossbehälters auf die in der Lagerstation 1 angeordneten Behälterstützen 10. Ein in den Lagerbereich einer Lagerstation 1 eingefahrener LKW ist zwischen den Behälterstützen 12 positioniert, wobei sich die Greifkantenelemente 34 der Eingreifelemente 12 in Freigabeposition befinden und dies beispielsweise durch eine farbige, z.B. grüne Signalanzeige 60 angezeigt wird. Der auf dem LKW befindliche Grossbehälter wird leicht angehoben, beispielsweise unter Nutzung einer Luftfederung des Transport-LKWs, wie dies durch Pfeile angedeutet ist.

Wie aus Fig. 4b erkennbar, werden nachfolgend die jeweiligen Betätigungshebel 52 der Eingreifelemente 12 manuell nach oben verschwenkt und in dieser Schwenklage die Feststelleinrichtung 54 arretiert, wobei nun das Greifkantenelement 34 bzw. der Schlitten 38 starr mit dem Betätigungshebel 52 gekoppelt ist. Die Signaleinrichtung 56 zeigt dies an, beispielsweise durch eine rote Signalanzeige 60.

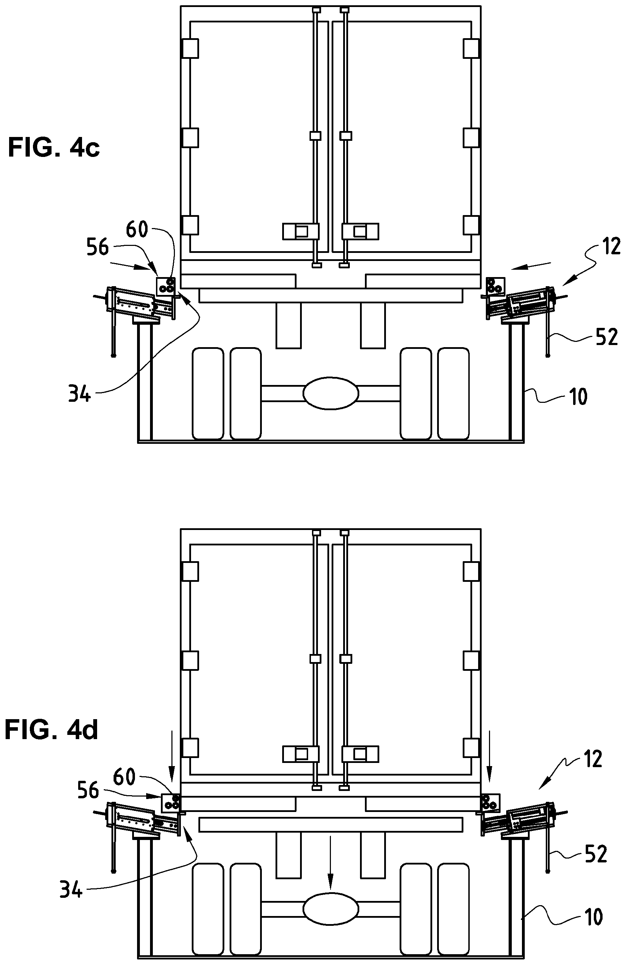

Die folgende Phase ist in Figur 4c dargestellt, wobei der Betätigungshebel 52 aus der oberen Schwenklage (dargestellt in Fig. 4b) nach unten verschwenkt wird und das mit dem Betätigungshebel 52 starr verbundene Greifkantenelement 34 bzw. der Schlitten 38 in die Lagerposition in Richtung des Lagerbereichs zum Grossbehälter hin verschoben wird, so dass es zumindest teilweise unter dem Grossbehälter zu liegen kommt. Die Lage des Greifkantenelements 34 bzw. des Schlittens 38 wird mittels der eingerasteten Blockiervorrichtung 42 gesichert. Die Signaleinrichtung 56 zeigt dies an, beispielsweise durch zwei gleichzeitig leuchtende Signalanzeigen 60.

Anschliessend wird der Grossbehälter mit Hilfe des LKWs abgesenkt, angedeutet durch Pfeile und kommt in Eingriff mit dem Greifkantenelement 34, wie dies in Fig. 4d dargestellt ist. Mit dem Absenken bzw. Aufnehmen des Grossbehälters an den Behälterstützen 10 werden die vorgesehenen Blockiervorrichtungen 42 gelöst, so dass einer durch das Federelement 46 ermöglichte automatische Rückstellung des Greifkantenelements 34 bzw. des Schlittens 38 in die Freigabeposition ohne weitere Handgriffe erfolgen kann.

## Patentansprüche

1. Lagerstation (1) für Grossbehälter mit wenigstens vier Behälterstützen (10), die zwischen sich einen Lagerbereich definieren und die jeweils ein Eingreifelement (12) zum Lagern des Grossbehälters an oder auf den Behälterstützen (10) aufweisen, wobei das Eingreifelement (12) ein Greifkantenelement (34) umfasst, welches in Eingriff mit einer am Grossbehälter ausgebildeten Greifkante bringbar ist und welches bewegbar ist zwischen einer Lagerposition, in der es zum Lagerbereich hin gerichtet und zum Aufnehmen des Grossbehälters bereit ist, und einer Freigabeposition, in der es weg vom Lagerbereich gerichtet ist,
**dadurch gekennzeichnet, dass** das Greifkantenelement (34) mindestens in die Lagerposition und/oder Freigabeposition automatisch mittels einer Federkraft eines Federelements (46) bewegbar ist.

2. Lagerstation (1) nach Anspruch 1, **dadurch gekennzeichnet, dass** das Greifkantenelement (34) gegen die Federkraft manuell in die Lager- und/oder Freigabeposition bewegbar ist.

3. Lagerstation (1) nach Anspruch 1, **dadurch gekennzeichnet, dass** das Greifkantenelement (34) gegen die Federkraft mittels einer Antriebseinheit (40) in die Lager- und/oder Freigabeposition bewegbar ist.

4. Lagerstation (1) nach Anspruch 3, **dadurch gekennzeichnet, dass** die Antriebseinheit (40) einen Elektromotor umfasst, welcher eine Welle (48) drehend antreibt und Mittel (50) vorgesehen sind, welche die Drehbewegung der Welle (48) in eine translatorische Bewegung des Greifkantenelements (34) umsetzen.

5. Lagerstation (1) nach einem der vorhergehenden Ansprüche,
**dadurch gekennzeichnet, dass** das Greifkantenelement (34) entlang einer Führungsstrecke zwischen Lager- und Freigabeposition bewegbar ist, welche gegenüber der Horizontalen geneigt ist.

6. Lagerstation (1) nach einem der vorhergehenden Ansprüche,
**dadurch gekennzeichnet, dass** das Greifkantenelement (34) an dem Eingreifelement (12) verschieblich gelagert und geführt ist.

7. Lagerstation (1) nach einem der vorhergehenden Ansprüche,
**dadurch gekennzeichnet, dass** das Greifkantenelement (34) an einem Schlitten (38) angeordnet ist, welcher verschieblich an dem Eingreifelement (12) gelagert ist.

8. Lagerstation (1) nach einem der vorhergehenden Ansprüche,
**dadurch gekennzeichnet, dass** das Greifkantenelement (34) in mindestens der Lagerposition oder Freigabeposition mittels einer Blockiervorrichtung (42) arretiert ist.

9. Lagerstation (1) nach Anspruch 8, **dadurch gekennzeichnet, dass** die Blockiervorrichtung (42) durch das Aufnehmen des Grossbehälters an den Behälterstützen (10) gelöst ist.

10. Lagerstation (1) nach Anspruch 9, **dadurch gekennzeichnet, dass** die Blockiervorrichtung (42) durch eine beim Aufnehmen des Grossbehälters an den Behälterstützen (10) erfolgende vertikale Bewegung des Greifkantenelements (34) relativ zu dem Eingreifelement (12) gelöst wird.

11. Lagerstation (1) nach einem der vorhergehenden Ansprüche,
**dadurch gekennzeichnet, dass** an dem Eingreifelement (12) ein Betätigungshebel (52) vorgesehen ist, eingerichtet zum manuellen Bewegen des Greifkantenelements (34).

12. Lagerstation (1) nach Anspruch 11, **dadurch gekennzeichnet, dass** der Betätigungshebel (52) mit einem Hebelmechanismus verbunden ist, wobei eine lösbare Feststelleinrichtung (54) angeordnet ist, um den Betätigungshebel (52) und das Greifkantenelement (34) starr zu verbinden.

13. Lagerstation (1) nach einem der vorhergehenden Ansprüche,
**dadurch gekennzeichnet, dass** das Eingreifelement (12) an mindestens einem Stützelement (24) angeordnet ist, welches in einem Lagerbock (22) verschieblich gelagert ist.

14. Lagerstation (1) nach Anspruch 13, **dadurch gekennzeichnet, dass** das mindestens eine Stützelement (24) relativ zum Lagerbock (22) höhenverstellbar und arretierbar ist.

15. Behälterstütze (10) für eine Lagerstation (1) für Grossbehälter, wobei die Behälterstütze (10) gemäss den Merkmalen nach einem oder mehreren der Ansprüche 1 bis 14 ausgebildet ist.
